# EUROPÄISCHE PATENTANMELDUNG

(11) **EP 2 112 644 A1**
(43) Veröffentlichungstag der Anmeldung: **28.10.2009**
(21) Anmeldenummer: 09158344.3
(22) Anmeldetag: 21.04.2009
(51) Int. Cl.: G09B 9/058

(54) **Motorrad-Klangsimulationssystem**

(30) Priorität: 25.04.2008 DE 202008005792 U
(71) Anmelder: POLO EXPRESSVERSAND Gesellschaft für Motorradbekleidung und Sportswear mbH, 40589 Düsseldorf (DE)
(72) Erfinder: Lentzen, Petra, 47844 Willich (DE)
(74) Vertreter: Kluin, Jörg-Eden

(57) **Zusammenfassung**

Bei einem Motorrad-Klangsimulationssystem (100), mit einer Speicheranordnung (12), die Geräuschdateien von Fahrgeräuschen von Kombinationen von verschiedenen Motorrad-Typen mit verschiedenen, an dem jeweiligen Motorradtyp anbringbaren Auspuffanlagen in unterschiedlichen Fahrsituationen umfasst, mit einer Eingabeeinrichtung (14), mit welcher die verschiedenen Fahrgeräusche abrufbar sind, und mit einer akustischen Wiedergabeeinrichtung (15), mittels welcher die abgerufenen Fahrgeräusche akustisch wiedergebbar sind, ist zumindest die akustische Wiedergabeeinrichtung (15) in einer von einer Person begehbaren Kammer (1) vorgesehen, die gegenüber der Umgebung schallgedämpft ist.

## Beschreibung

Die Erfindung betrifft ein Motorrad-Klangsimulationssystem.

Das Motorrad stellt heutzutage nicht mehr ein preisgünstiges Fortbewegungsmittel dar. Vielmehr handelt es sich bei Motorrädern derzeit um technisch sehr hochwertige und teilweise auch kostenintensive Fahrzeuge, die hobbymäßig betrieben werden und mit denen sich die sie betreibenden Personen dementsprechend in besonderer Weise identifizieren.

Es besteht daher unter einem großen Anteil der Motorrad fahrenden Personen das Bestreben, handelsübliche Motorräder zu individualisieren. Hierzu kommen nicht nur optische Veränderungen in Betracht, sondern auch Veränderungen des Fahrgeräusches, das bei einem bestimmten Motorradtyp im wesentlichen durch den Klang der Auspuffanlage bestimmt wird.

Den Wunsch einer Vielzahl von Motorrad fahrenden Personen nach klanglicher Individualisierung hat die Zubehörindustrie erkannt und bietet in der Zwischenzeit eine Vielzahl unterschiedlicher Auspuffanlagen für eine Vielzahl gängiger Motorradtypen an.

Der Erfindung liegt daher die Aufgabe zugrunde, einer Motorrad fahrenden Person, die bestrebt ist, ihr Motorrad klanglich zu individualisieren, die Auswahl einer Auspuffanlage, die den Wünschen der Person nahe kommt, zu erleichtern.

Diese Aufgabe wird durch das in Anspruch 1 wiedergegebene Motorrad-Klangsimulationssystem gelöst.

Es umfasst eine Speicheranordnung, die Geräuschdateien von Fahrgeräuschen von Kombinationen von verschiedenen Motorradtypen mit verschiedenen, an dem jeweiligen Motorradtyp anbringbaren Auspuffanlagen in unterschiedlichen Fahrsituationen umfasst. Ferner ist eine Eingabeeinrichtung vorgesehen, mit welcher die verschiedenen Fahrgeräusche abrufbar sind. Zur akustischen Wiedergabe ist die Speicheranordnung mit einer akustischen Wiedergabeeinrichtung wirkverbunden, mittels welcher die abgerufenen Fahrgeräusche akustisch wiedergebbar sind. Mit Hilfe dieses Motorradklangsimulationssystems kann eine Person somit durch Abhören der gespeicherten Geräuschdateien eine Auswahl treffen, welche Motorrad/Auspuffanla-gen-Kombination für sie am wohl klingendsten erscheint. Damit diese Auswahl insbesondere in einem Motorrad- oder Motorradzubehör-Geschäft in einer ansprechenden Weise vorgenommen werden kann, ohne dass hierbei weiteres Publikum belästigt, sondern möglicherweise auch zur akustischen Individualisierung eines eigenes Motorrades motiviert wird, ist bei dem erfindungsgemäßen Motorrad-Klangsimu-lationssystem die akustische Wiedergabeeinrichtung in einer von einer Person begehbaren Kammer vorgesehen, die gegenüber der Umgebung schallgedämpft ist. Die Person kann sich somit die möglichen "Sounds", die sich durch Anbringung unterschiedlicher Auspuffanlagen erzielen lassen, in zumindest nahezu naturgetreuen Lautstärken anhören, ohne dass hierbei paralleler Verkaufs- und/oder Beratungsbetrieb in Verkaufsräumen behindert wird. Dabei ist es nicht notwendig und auch nicht bevorzugt, die Schalldämpfung derart effektiv auszubilden, dass keinerlei Geräusche aus der Kammer nach außen dringen. Vielmehr kann es erwünscht sein, dass Geräusche von der Kammer nach außen in einer Lautstärke abgestrahlt werden, die nicht störend wirkt, jedoch von in dem Geschäftsraum befindlichen Personen wahrgenommen werden und somit deren Neugier wecken kann.

Die aufrufbaren Geräuschdateien umfassen - wie bereits erwähnt - Fahrgeräusche unterschiedlicher Fahrsituationen, damit die Person sich einen Gesamteindruck davon verschaffen kann, wie sich ihr Motorrad mit der jeweils ausgewählten Auspuffanlage für sie selbst und für Dritte etwa anhören wird.

Besonders bevorzugt ist eine Weiterbildung des erfindungsgemäßen Motorrad-Klangsimulationssystems, bei welcher die Speicheranordnung zusätzlich Bilddateien umfasst, die die Kombinationen der verschiedenen Motorradtypen mit den verschiedenen Auspuffanlagen in den unterschiedlichen Fahrsituationen zeigen. Die Bilddateien können mit einer optischen Wiedergabeeinrichtung, die in der Kammer angeordnet ist, wiedergegeben werden. Durch diese Weiterbildung des erfindungsgemäßen Motorrad-Klangsimulationssystems kann die nach Individualisierung bestrebte Person neben der akustischen Veränderung auch den durch die jeweilige Auspuffanlage am Motorrad vermittelten optischen Eindruck überprüfen und somit leichter feststellen, ob insgesamt die Auspuffanlage ihren Vorstellungen entspricht.

Ganz besonders bevorzugt ist eine Ausgestaltung des erfindungsgemäßen Motorrad-Klangsimulationssystems, bei welcher die Eingabeeinrichtung folgende, nacheinander aufrufbare Eingabeebenen umfasst:
a) Motorradhersteller-Ebene, in der verschiedene Motorradhersteller anwählbar sind;
b) Motorradmodell-Ebene, in der verschiedene Modelle des vorgewählten Motorradherstellers anwählbar sind;
c) Auspuffanlagenhersteller-Ebene, in der verschiedene Auspuffanlagenhersteller anwählbar sind;
d) Auspuffanlagenmodell-Ebene, in der verschiedene Modelle eines Auspuffanlagenherstellers anwählbar sind.

Aufgrund dieser Eingabestruktur ist es besonders einfach, eine bestimmte Motorrad/Auspuffanlagen-Kombination zu wählen. Mit Hilfe einer elektronischen Datenverarbeitungsanlage erfolgt dann eine Zuordnung der mittels der Eingaben vorgenommenen Auswahl zu den zugehörigen Geräusch- und gegebenenfalls auch Bilddateien.

Um der Person einen noch größeren Anreiz zu geben, unterschiedliche Motorrad/Auspuffanlagen-Kombinationen auszuwählen ist es besonders bevorzugt, wenn das erfindungsgemäße Motorrad-Klangsimulationssystem in der Kammer ein Simulationsmotorrad umfasst, auf welches die Person aufsitzen kann.

Die Eingabeeinrichtung ist dann vorzugsweise derart angeordnet, dass sie von der auf diesem Simulationsmotorrad aufsitzenden Person betätigbar ist.

Ferner ist in diesem Falle - sofern vorhanden - die optische Wiedergabeeinrichtung derart angeordnet, dass sie sich im Blickfeld der auf dem Simulationsmotorrad aufsitzenden Person befindet.

Um der Person ein noch intensiveres Erlebnis bei der Auswahl einer Motorrad/Auspuffanlagen-Kombination zu ermöglichen, ist das Simulationsmotorrad mit einem an sich, beispielsweise aus der DE 42 21 602 A1 bekannten Fahrzustandssimulator gekoppelt, der die zu dem mittels der akustischen und optischen Wiedergabeeinrichtungen wiedergegebenen Fahrsituationen simuliert.

Grundsätzlich ist es aufgrund der bereits bei einfachen Datenverarbeitungsanlagen zur Verfügung stehenden Rechenleistungen möglich, die Geräuschdateien für die unterschiedlichen Motorrad/Auspuffanlagen-Kombinationen künstlich zu erzeugen. Damit jedoch der zu erwartende "Sound" möglichst naturgetreu mit Hilfe des erfindungsgemäßen Motorrad-Klangsimulationssystems erzeugt werden kann, ist es besonders bevorzugt, die Geräuschdateien anhand von realen Motorrad/Aus-puffanlagen-Kombinationen aufgenommenen Fahrgeräuschen zu erzeugen und abzuspeichern.

Das Klangerlebnis in der Kammer kann abermals dadurch intensiviert werden, dass die akustische Wiedergabeeinrichtung eine Mehrkanaleinrichtung ist, wie sie beispielsweise auch bei Heimkino-Anlagen Verwendung findet.

Um die gewünschte Schalldämpfung nach außen zu erzielen und um zu vermeiden, dass es durch schallreflexionsbedingte Resonanzen zu Klangverfärbungen kommt, ist bei einer besonders bevorzugten Ausführungsform des Motorrad-Klangsimu-lationssystems zumindest ein Teil der Innenwände der Kammer mit einer schalldämmenden Bekleidung versehen. Derartige Bekleidungen, die regelmäßig eine "Eierkästen-artige" Oberflächenstruktur aufweisen, bestehen oft aus offenporigem Material und sind in vielen Varianten bekannt.

Um die Neugier auch weiterer, in dem jeweiligen Geschäftsraum befindlicher Personen zu wecken und somit möglicherweise Kaufanreize auch bei weiteren Personen zu wecken ist bei einer ganz besonders bevorzugten Ausführungsform des erfindungsgemäßen Motorrad-Klangsimulationssystems ein Teil der Seitenwände der Kammer durchsichtig ausgebildet, so dass der außerhalb befindliche Betrachter den Simulationsvorgang beobachten kann.

Die optische Wiedergabeeinrichtung umfasst - bevorzugt - einen handelsüblichen Flachbildschirm. Andere Einrichtungen zur Bilddarstellung können - falls gewünscht - jedoch ebenfalls Verwendung finden. Beispielhaft genannt seien lediglich Projektionseinrichtungen, die insbesondere dann zum Einsatz kommen werden, wenn eine größere Bildfläche erzielt werden soll.

Ganz besonders bevorzugt ist eine Weiterbildung des Motorrad-Klangsimulationssystems, bei welchem ein Regler zur Lautstärkenregelung in der Kammer vorgesehen ist. Dieser wird - besonders bevorzugt - von dem Gasgriff des Simulationsmotorrads gebildet.

Die Erfindung soll nun unter Bezugnahme auf die beigefügten Zeichnungen weiter erläutert werden. Es zeigen:

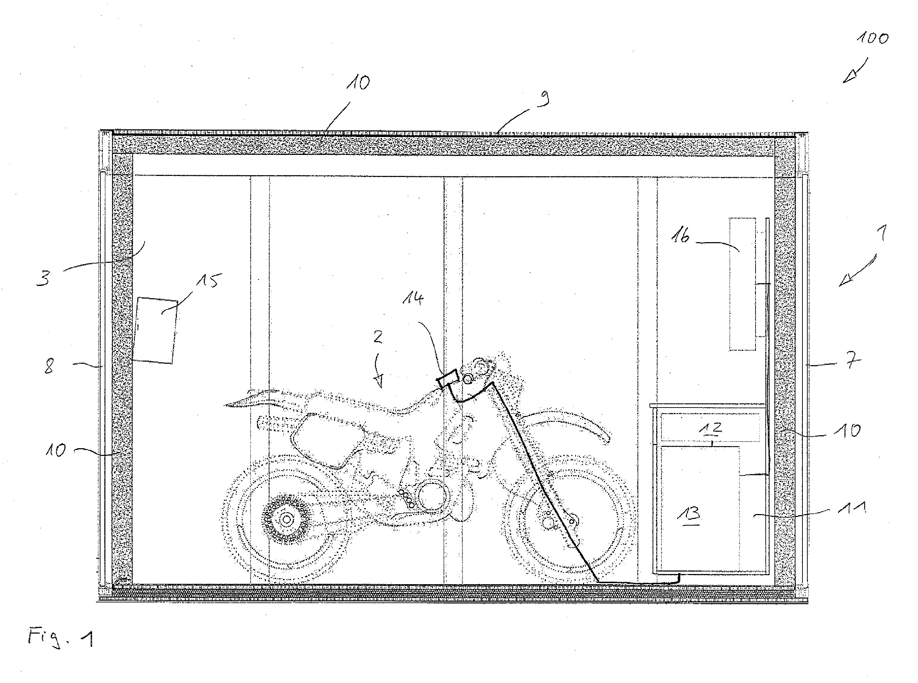

- Fig. 1: - schematisch - ein Ausführungsbeispiel des erfindungsgemäßen Motorrad-Klangsimulationssystems in einer Seitenansicht;
- Fig. 2 -: schematisch - das System gemäß Fig.1 in einer Ansicht gemäß Fig. 1 von oben;
- Fig. 3 -: schematisch - einen Blick auf die in Fig. 1 rechts, in Fig. 2 oben dargestellte Wand;

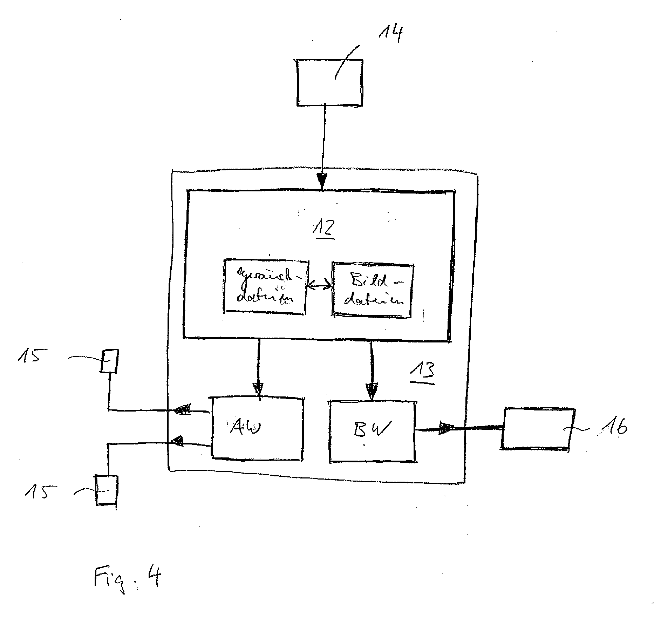

- Fig. 4: eine schematische Blockdarstellung von Komponenten dieses Ausführungsbeispiels des erfindungsgemäßen Motorrad-Klangsimulationssystems sowie
- Fig. 5: ein Eingabeebenen-Diagramm der Eingabeeinrichtung dieses Ausführungsbeispiels.

Das als Ganzes mit 100 bezeichnete Ausführungsbeispiel des Motorrad-Klangsimulationssystems umfasst eine etwa quaderförmige Kammer 1, in deren Zentrum ein Simulationsmotorrad 2 aufgestellt ist. Bei dem hier dargestellten Simulationsmotorrad 2 handelt es sich um ein handelsübliches Motorrad, welches in einer der Zeichnung nicht entnehmbaren Weise gegen Umkippen gesichert aufgestellt ist. Bei dem Simulationsmotorrad 2 kann es sich jedoch auch um ein solches handeln, welches mit einem an sich bekannten Fahrzustandssimulator gekoppelt ist.

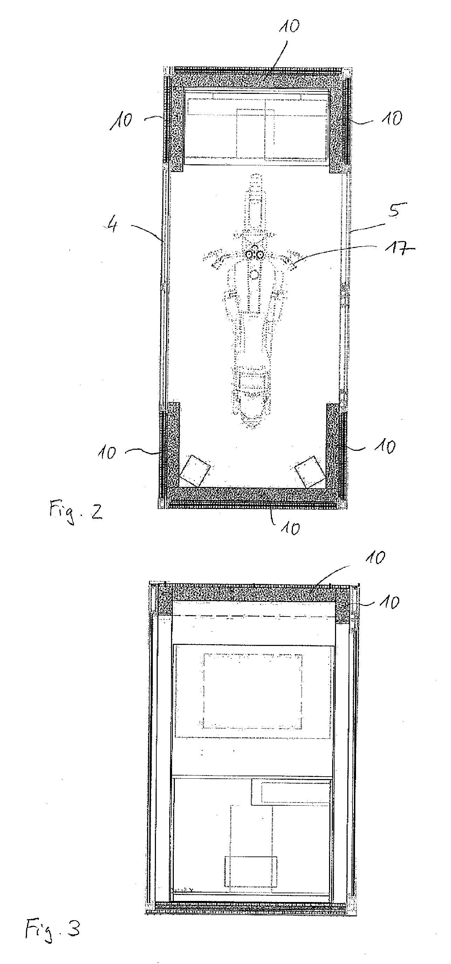

Die Kammer 1 umfasst ein gegenüber der Umgebung vollständig verschließbares Gehäuse 3, dessen sich parallel zur Längsrichtung des Simulationsmotorrades 2 erstreckenden Seitenwände 4, 5 in den mittleren Bereichen aus Glas ausgebildet sind. Der gläserne Bereich der in Fig. 2 rechts dargestellten Seitenwand 5 ist als Schiebetür 6 ausgebildet, durch die der Innenraum der Kammer 1 betreten werden kann.

Die nicht gläsernen Bereiche der Seitenwände 4 und 5, die Vorderwand 7, die Hinterwand 8 und die Decke 9 der Kammer 1 sind mit schalldämmendem Material 10 bekleidet.

An der Vorderwandung 7 des Gehäuses 3 befindet sich in der Kammer ein Geräteschrank 11, in welchem eine Speicheranordnung 12 untergebracht ist. Sie umfasst Geräuschdateien von Fahrgeräuschen von Kombinationen von verschiedenen Motorradtypen mit verschiedenen, an den jeweiligen Motorradtyp anbringbaren Auspuffanlagen in unterschiedlichen Fahrsituationen, sowie Bilddateien, die die Kombinationen der verschiedenen Motorradtypen mit den verschiedenen Auspuffanlagen in den unterschiedlichen Fahrsituationen zeigen.

Ferner ist in dem Geräteschrank eine elektronische Datenverarbeitungsanlage 13 vorgesehen, die mit der Speicheranordnung derart verbunden ist, dass sie die Geräusch- und Bilddateien auslesen kann. An die Datenverarbeitungsanlage 13 ist ferner eine Eingabeeinrichtung 14 angeschlossen, mittels welcher die Geräusch- und Bilddateien auswählbar sind. Die Eingabeeinrichtung 14 ist auf dem Tank des Simulationsmotorrades 2 angeordnet, so dass sie für die aufsitzende Person leicht zu erreichen ist.

In der Datenverarbeitungsanlage werden die Geräusch- und Bilddateien mit einem Akustikwandler AW und mit einem Bildwandler BW derart aufbereitet, dass sie als Tonsignale einer akustischen Wiedergabeeinrichtung 15, die zwei Lautsprecher umfasst, und einer optischen Wiedergabeeinrichtung 16, die einen Flachbildschirm umfasst, zugeleitet werden können.

Der Flachbildschirm befindet sich im Sichtfeld einer in der Zeichnung nicht dargestellten, auf dem Simulationsmotorrad aufsitzenden Person. Die akustische Wiedergabeeinrichtung 15 befindet sich an der Hinterwand 8 des Gehäuses 3, um so besser das üblicherweise an den im hinteren Motorradbereich befindlichen Auspuffenden entstehende Fahrgeräusch simulieren zu können.

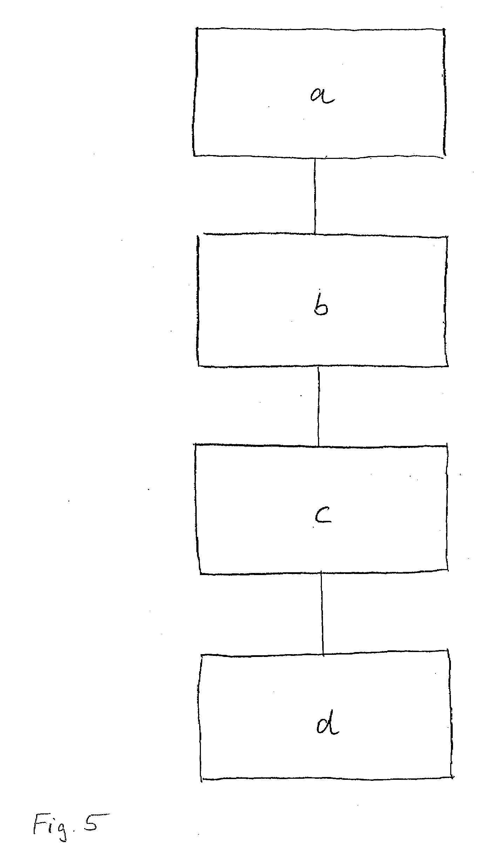

Die Eingabeeinrichtung 14 weist die nacheinander aufrufbaren folgenden Eingabeebenen auf, die in Fig. 5 symbolisiert sind:
- Motorradhersteller-Ebene a, in der verschiedene Motorradhersteller anwählbar sind;
- die nach der Herstellereingabe erscheinende Motorradmodell-Ebene, in der verschiedene Modelle eines bestimmten Motorradherstellers anwählbar sind;
- die dann erscheinende Auspuffanlagenhersteller-Ebene c, in der verschiedene Auspuffanlagenhersteller anwählbar sind sowie
- die Auspuffanlagenmodell-Ebene d, in der verschiedene Modelle eines Auspuffanlagenherstellers, die an das ausgewählte Motorradmodell anbringbar sind, anwählbar sind.

Nachdem die Eingabe abgeschlossen ist werden von der Datenverarbeitungsanlage 13 die zu der gewählten Motorrad/Auspuffanlagen-Kombination gehörenden Geräusch- und Bilddateien ausgelesen und mittels der akustischen und optischen Wiedergabeeinrichtungen 15, 16 wiedergegeben.

Um die Lautstärke des "Sounds" in der Kabine an die Vorlieben der auf dem Simulationsmotorrad (2) aufsitzenden Person anpassen zu können, ist ein mit der akustischen Wiedergabeeinrichtung 15 wirkverbundener Lautstärkeregler vorgesehen, der von dem Gasdrehgriff des Simulationsmotorrades (2) gebildet ist.

### Bezugszeichenliste:

- 100: Motorrad-Klangsimulationssystem
- 1: Kammer
- 2: Simulationsmotorrad
- 3: Gehäuse
- 4: Seitenwand
- 5: Seitenwand
- 6: Schiebetür
- 7: Vorderwand
- 8: Hinterwand
- 9: Decke
- 10: schalldämmendes Material
- 11: Geräteschrank
- 12: Speicheranordnung
- 13: Datenverarbeitungsanlage
- 14: Eingabeeinrichtung
- 15: akustische Wiedergabeeinrichtung
- 16: optische Wiedergabeeinrichtung
- 17: Regler
- AW: Akustikwandler
- BW: Bildwandler

## Patentansprüche

1. Motorrad-Klangsimulationssystem (100),
mit einer Speicheranordnung (12), die Geräuschdateien von Fahrgeräuschen von Kombinationen von verschiedenen Motorrad-Typen mit verschiedenen, an dem jeweiligen Motorradtyp anbringbaren Auspuffanlagen in unterschiedlichen Fahrsituationen umfasst,
mit einer Eingabeeinrichtung (14), mit welcher die verschiedenen Fahrgeräusche abrufbar sind,
und mit einer akustischen Wiedergabeeinrichtung (15), mittels welcher die abgerufenen Fahrgeräusche akustisch wiedergebbar sind,
wobei zumindest die akustische Wiedergabeeinrichtung (15) in einer von einer Person begehbaren Kammer (1) vorgesehen ist, die gegenüber der Umgebung schallgedämpft ist.

2. Motorrad-Klangsimulationssystem nach Anspruch 1, **dadurch gekennzeichnet, dass** die Speicheranordnung (12) Bilddateien umfasst, die die Kombinationen der verschiedenen Motorradtypen mit den verschiedenen Auspuffanlagen in den unterschiedlichen Fahrsituationen zeigen, und dass eine optische Wiedergabeeinrichtung (16) vorgesehen ist, die in der Kammer (1) angeordnet ist, mittels welcher die jeweils zu den wiedergegebenen Fahrgeräuschen gehörenden, die jeweilige Fahrsituation zeigenden Bilder wiedergebbar sind.

3. Motorrad-Klangsimulationssystem nach Anspruch 1 oder 2, **dadurch gekennzeichnet, dass** die Eingabeeinrichtung (14) folgende Eingabeebenen umfasst:
a) Motorradhersteller-Ebene, in der verschiedene Motorradhersteller anwählbar sind;
b) Motorradmodell-Ebene, in der verschiedene Modelle eines Motorradherstellers anwählbar sind;
c) Auspuffanlagenhersteller-Ebene, in der verschiedene Auspuffanlagenhersteller anwählbar sind;
d) Auspuffanlagenmodell-Ebene, in der verschiedene Modelle eines Auspuffanlagenherstellers anwählbar sind,
und dass die Eingabeeinrichtung (14) mit einer elektronischen Datenverarbeitungsanlage (13) kommuniziert, die eine Zuordnung der vorgenommenen Eingaben zu den zugehörigen Geräusch- und gegebenenfalls Bilddateien vornimmt.

4. Motorrad-Klangsimulationssystem nach einem der Ansprüche 1 bis 3, **dadurch gekennzeichnet, dass** in der Kammer (1) ein Simulationsmotorrad (2) vorgesehen ist, auf welchem die Person aufsitzen kann.

5. Motorrad-Klangsimulationssystem nach Anspruch 4, **dadurch gekennzeichnet, dass** die Eingabeeinrichtung (14) derart angeordnet ist, dass sie von der auf dem Simulationsmotorrad (2) aufsitzenden Person betätigbar ist.

6. Motorrad-Klangsimulationssystem nach Anspruch 2 und 4 oder 5, **dadurch gekennzeichnet, dass** die optische Wiedergabeeinrichtung (15) im Blickfeld der auf dem Simulationsmotorrad (2) aufsitzenden Person angeordnet ist.

7. Motorrad-Klangsimulationssystem nach einem der Ansprüche 4 bis 6, **dadurch gekennzeichnet, dass** das Simulationsmotorrad (2) mit einem an sich bekannten Fahrzustandssimulator gekoppelt ist, der die mittels der akustischen und optischen Wiedergabeeinrichtungen (15, 16) wiedergegebenen Fahrsituationen simuliert.

8. Motorrad-Klangsimulationssystem nach einem der Ansprüche 1 bis 7, **dadurch gekennzeichnet, dass** den Geräuschdateien an realen Motorrad/Auspuffanlagen-Kombinationen aufgenommene Fahrgeräusche zugrunde liegen.

9. Motorrad-Klangsimulationssystem nach einem der Ansprüche 1 bis 8, **dadurch gekennzeichnet, dass** die akustische Wiedergabeeinrichtung (15) eine Mehrkanaleinrichtung ist.

10. Motorrad-Klangsimulationssystem nach einem der Ansprüche 1 bis 9, **dadurch gekennzeichnet, dass** zumindest ein Teil der Innenwände der Kammer (1) mit einer schalldämmenden Bekleidung (10) versehen ist.

11. Motorrad-Klangsimulationssystem nach einem der Ansprüche 1 bis 10, **dadurch gekennzeichnet, dass** ein Teil der Seitenwände der Kammer (1) durchsichtig ausgebildet ist.

12. Motorrad-Klangsimulationssystem nach einem der Ansprüche 2 bis 11, **dadurch gekennzeichnet, dass** die optische Wiedergabeeinrichtung (16) einen Bildschirm aufweist.

13. Motorrad-Klangsimulationssystem nach einem der Ansprüche 1 bis 12, **dadurch gekennzeichnet, dass** ein von einer in der Kammer (1) befindlichen Person betätigbarer Regler (17) zur Regelung der mit der akustischen Wiedergabeeinrichtung (AW) erzielten Lautstärke vorgesehen ist.

14. Motorrad-Klangsimulationssystem nach einem der Ansprüche 4 und 13, **dadurch gekennzeichnet, dass** der Regler (17) von dem Drehgasgriff des Simulationsmotorrades (2) gebildet ist.
